# EUROPEAN PATENT APPLICATION

(11) **EP 3 757 905 A1**
(43) Date of publication of application: **30.12.2020**
(21) Application number: 19812148.5
(22) Date of filing: 28.05.2019
(51) Int. Cl.: G06N 3/08

(54) **DEEP NEURAL NETWORK TRAINING METHOD AND APPARATUS**

(30) Priority: 31.05.2018 CN 201810554459
(71) Applicant: HUAWEI TECHNOLOGIES CO., LTD., Shenzhen, Guangdong 518129 (CN); The University Of Sydney, Sydney, New South Wales 2006 (AU)
(72) Inventor: ZHANG, Weichen, Sydney, New South Wales 002006 (AU); OUYANG, Wanli, Sydney, New South Wales 002006 (AU); XU, Dong, Sydney, New South Wales 002006 (AU); LI, Wen, Sydney, New South Wales 002006 (AU); WU, Xiaofei, Shenzhen, Guangdong 518129 (CN); LIU, Jianzhuang, Shenzhen, Guangdong 518129 (CN); QIAN, Li, Shenzhen, Guangdong 518129 (CN)
(74) Representative: Körber, Martin Hans
(86) International application number: PCT/CN2019/088846
(87) International publication number: WO 2019/228358

(57) **Abstract**

The present invention relates to artificial intelligence, and proposes a cooperative adversarial network. A loss function is set at a lower layer of the cooperative adversarial network, and is used to learn a domain discriminating feature. In addition, a cooperative adversarial target function includes the loss function and a domain invariant loss function that is set at a last layer (that is, a higher layer) of the cooperative adversarial network, to learn both the domain discriminating feature and a domain-invariant feature. Further, an enhanced collaborative adversarial network is proposed. Based on the collaborative adversarial network, target domain data is added to training of the collaborative adversarial network, an adaptive threshold is set based on precision of a task model, to select a target domain training sample, network confidence is discriminated based on a domain, and a weight of the target domain training sample is set. Prediction precision applied to the target domain can be improved by using the task model trained by using the collaborative adversarial network.

## Description

### TECHNICAL FIELD

The present invention relates to the machine learning field, and in particular, to a training method and an apparatus based on an adversarial network in the transfer learning field.

### BACKGROUND

Artificial intelligence (Artificial Intelligence, AI) is a theory, a method, a technology, and an application system for simulating, extending, and expanding human intelligence by using a digital computer or a machine controlled by the digital computer, to sense an environment, obtain knowledge, and achieve an optimal result by using the knowledge. In other words, the artificial intelligence is a branch of computer science, and is intended to understand intelligence essence and produce a new intelligent machine that can react in a manner similar to the human intelligence. The artificial intelligence is to study design principles and implementation methods of various intelligent machines, so that the machines have perceiving, inferring, and decision-making functions. Researches in the artificial intelligence field include a robot, natural language processing, computer vision, decision-making and inference, human-computer interaction, recommendation and search, an AI basic theory, and the like.

Deep learning is crucial to develop the artificial intelligence field in recent years, and in particular, to achieve an attractive effect in various tasks of computer vision, such as target classification/detection/recognition/segmentation. However, success of the deep learning needs to depend on a large amount of labeled data. However, labeling a large amount of data is extremely laborious and time-consuming. At present, for a same or similar task, a task model trained based on a dataset or labeled data disclosed in a source domain may be directly applied to task prediction in a target domain. The target domain is relative to the source domain. There is usually no labeled data or insufficient labeled data in the target domain. The dataset and the labeled data disclosed in the source domain may be referred to as source domain data. Correspondingly, unlabeled data in the target domain may be referred to as target domain data. Because distribution of the target domain data is different from that of the source domain data, directly using a model trained based on the source domain data causes a poor effect.

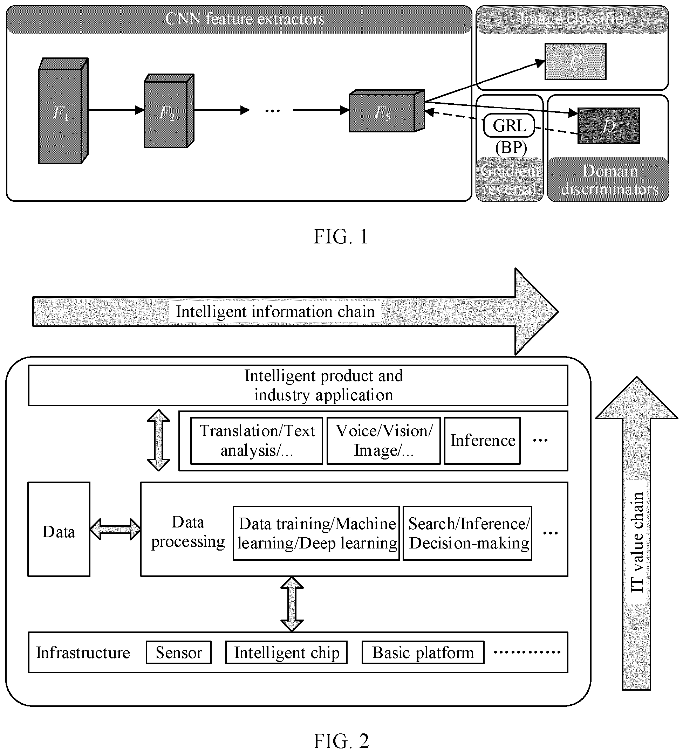

Unsupervised domain adaptation (unsupervised domain adaptation) is a typical transfer learning method that can be used to resolve the foregoing problem. Different from a method for directly using the model trained based on the source domain data for task prediction in the target domain, in the unsupervised domain adaptation method, not only the source domain data is used to perform training, but also unlabeled target domain data is combined into the training, so that a trained model has a better prediction effect for the target domain data. Currently, an unsupervised domain adaptation method with relatively good performance in the prior art is an unsupervised domain adaptation method based on domain adversarial. FIG. 1 shows a method for training an image classifier through unsupervised domain adaptation based on domain adversarial. A feature of the method is that a domain-invariant feature is learned by using a domain discriminator (English full name: Domain Discriminator) and a gradient direction (Gradient Reversal) method when an image classification task is learned. Main steps are as follows: (1) In addition to being input into the image classifier, a feature extracted by using a convolutional neural network feature extractor (Convolutional Neural Network Feature Extractor, CNN Feature Extractor) is further used to create a domain discriminator. The domain discriminator may output a domain type of an input feature. (2) The gradient reversal method is used to modify a gradient direction in a reverse propagation process, so that the convolutional neural network feature extractor learns of a domain-invariant feature. (3) The convolutional neural network feature extractor and the classifier are used for image classification prediction in the target domain.

### SUMMARY

To resolve a problem that a domain-discriminating lower-layer feature is lost in an unsupervised domain adaptation method based on domain adversarial, this application provides a training method based on a cooperative adversarial network, to retain the domain-discriminating lower-layer feature, thereby improving precision of a task model, and further provides a method for adding cooperative domain adversarial, to use target domain data for training the task model, to improve adaptability of the trained task model in a target domain.

According to a first aspect, this application provides a method for training a deep neural network. The training method is applied to the transfer learning field, and specifically is that a task model trained based on source domain data is applied to prediction for target domain data. The training method includes: extracting a lower-layer feature and a higher-layer feature of sample data in each of source domain data and target domain data that are input into the deep neural network, where the target domain data is different from the source domain data, in other words, data distribution of the target domain data is inconsistent with that of the source domain data; calculating, by using a first loss function, a first loss corresponding to the sample data based on the higher-layer feature of the sample data in each of the source domain data and the target domain data and a corresponding domain label; calculating, by using a second loss function, a second loss corresponding to the sample data based on the lower-layer feature of the sample data in each of the source domain data and the target domain data and a corresponding domain label; calculating, by using a third loss function, a third loss corresponding to the sample data in the source domain data based on the higher-layer feature of the sample data in the source domain data and a corresponding sample label; and updating a parameter of each module in a target deep neural network based on the first loss, the second loss, and the third loss obtained above. The parameter is updated through loss backpropagation, and during backpropagation, a gradient reversal operation needs to be performed on a gradient of the first loss. An objective of the gradient reversal operation is to implement a reverse conduction gradient, so that the loss becomes larger. The first loss function and the second loss function are separately set for the higher-layer feature and the lower-layer feature, so that the higher-layer feature has invariance and the lower-layer feature has domain discriminating, thereby improving prediction precision when the model obtained by training is applied to the target domain.

In a possible implementation of the first aspect, the target deep neural network includes a feature extraction module, a task module, a domain-invariant feature module, and a domain discriminating feature module. The feature extraction module includes at least one lower-layer feature network layer and a higher-layer feature network layer. Any one of the at least one lower-layer feature network layer may be used for extracting the lower-layer feature. The higher-layer feature network layer is used for extracting the higher-layer feature. The domain-invariant feature module is configured to enhance domain invariance of the higher-layer feature extracted by the feature extraction module. The domain discriminating feature module is configured to enhance domain discriminating of the lower-layer feature extracted by the feature extraction module.

The updating a parameter of a target deep neural network based on the first loss, the second loss, and the third loss includes: first calculating a total loss based on the first loss, the second loss, and the third loss; and then updating, based on the total loss, parameters of the feature extraction module, the task module, the domain-invariant feature module, and the domain discriminating feature module. It should be noted that, the total loss may be a sum of a first loss, a second loss, and a third loss of one piece of sample data, or may be a sum of a plurality of first losses, second losses, and third losses of a plurality of pieces of sample data. Each loss is specifically used for a parameter of a corresponding module in the target neural network in a backpropagation process. Specifically, the first loss is used for updating parameters of the domain-invariant feature module and the feature extraction module through backpropagation, and the second loss is used for updating parameters of the domain discriminating feature module and the feature extraction module through backpropagation. The third loss updates parameters of the task module and the feature extraction module through backpropagation. The loss is usually used for updating the parameter of the corresponding module through backpropagation when a corresponding gradient is further obtained.

In another possible implementation of the first aspect, the calculating, by using a first loss function, a first loss corresponding to the sample data based on the higher-layer feature of the sample data in each of the source domain data and the target domain data and a corresponding domain label includes: inputting the higher-layer feature of the sample data in each of the source domain data and the target domain data into the domain-invariant feature module to obtain a first result corresponding to the sample data; and calculating, by using the first loss function, the first loss corresponding to the sample data based on the first result corresponding to the sample data in each of the source domain data and the target domain data and the corresponding domain label.

The calculating, by using a second loss function, a second loss corresponding to the sample data based on the lower-layer feature of the sample data in each of the source domain data and the target domain data and a corresponding domain label includes: inputting the lower-layer feature of the sample data in each of the source domain data and the target domain data into the domain discriminating feature module to obtain a second result corresponding to the sample data; and calculating, by using the second loss function, the second loss corresponding to the sample data based on the second result corresponding to the sample data in each of the source domain data and the target domain data and the corresponding domain label.

The calculating, by using a third loss function, a third loss corresponding to the sample data in the source domain data based on the higher-layer feature of the sample data in the source domain data and a corresponding sample label includes: inputting the higher-layer feature of the sample data in the source domain data into the task module to obtain a third result corresponding to the sample data in the source domain data; and calculating, by using the third loss function, the third loss corresponding to the sample data in the source domain data based on the third result corresponding to the sample data in the source domain data and the corresponding sample label.

In another possible implementation of the first aspect, the domain-invariant feature module further includes: a gradient inverting module, and the training method further includes: performing gradient reversal processing on the gradient of the first loss by using the gradient reversal module. The gradient reversal can be used to reversely conduct the gradient of the first loss, so that the loss calculated by using the first loss function becomes larger, and the higher-layer feature has the domain-invariant feature.

In another possible implementation of the first aspect, the training method further includes: inputting the higher-layer feature of the sample data in the target domain data into the task module to obtain a corresponding prediction sample label and corresponding confidence; and selecting target domain training sample data from the target domain data based on the confidence corresponding to the sample data in the target domain data, where the target domain training sample data is sample data that is in the target domain data and whose corresponding confidence satisfies a preset condition. The target domain data is used to train the task model, so that classification precision of the task model on the target domain data can be further improved.

In another possible implementation of the first aspect, the training method further includes: setting a weight of the target domain training sample data based on a first result corresponding to the target domain training sample data. When the target domain training sample data is not likely to be discriminated by a domain discriminator, distribution of the target domain training sample data is relatively close to that of the source domain image data and the target domain image data, and is more helpful for training of the image classification model, so that a larger weight may be set, in training based on the first result, for the target domain training sample data that is not likely to be discriminated by the domain discriminator.

In a possible implementation of the first aspect, the setting a weight of the target domain training sample data based on a first result corresponding to the target domain training sample data includes: setting the weight of the target domain training sample data based on similarity between the first result corresponding to the target domain training sample data and a domain label. The similarity indicates a value of a difference between the first result and the domain label.

In another possible implementation of the first aspect, the setting the weight of the target domain training sample data based on similarity between the first result corresponding to the target domain training sample data and a domain label includes: calculating a first difference between the first result corresponding to the target domain training sample data and a domain label of a source domain, and a second difference between the first result corresponding to the target domain training sample data and a domain label of a target domain; and if an absolute value of the first difference is greater than an absolute value of the second difference, setting the weight of the target domain training sample data to a smaller value, for example, a value less than 0.5, otherwise, setting the weight of the target domain training sample data to a larger value, for example, a value greater than 0.5.

In another possible implementation of the first aspect, if the first result corresponding to the target domain training sample data is an intermediate value between a first domain label value and a second domain label value, the weight of the target domain training sample data is set to a maximum value (for example, 1). There is an example of the intermediate value. For example, the first domain label value is 0, the second domain label value is 1, and the intermediate value is 0.5 or a value in a floating interval of 0.5. The first domain label value is a value corresponding to a domain label of a source domain, and the second domain label value is a value corresponding to a domain label of a target domain.

In another possible implementation of the first aspect, before the selecting target domain training sample data from the target domain data based on the confidence corresponding to the sample data in the target domain data, the training method further includes: setting an adaptive threshold based on precision of the task model, where the task model includes the feature extraction module and the task module, the adaptive threshold is positively correlated to the precision of the task model, and the preset condition is that the confidence is greater than or equal to the adaptive threshold.

In another possible implementation of the first aspect, the adaptive threshold is calculated by using the following logical function: ${T}_{c} = \frac{1}{1 + {e}^{- {λ}_{c} ∗ A}} ,$ where
*T_{c}* is the adaptive threshold, A is the precision of the task model, and *λ_{c}* is a hyperparameter used to control an inclination degree of the logical function.

In another possible implementation of the first aspect, the training method further includes: extracting, by using the feature extraction module, a lower-layer feature and a higher-layer feature of the target domain training sample data; calculating, by using the first loss function, a first loss corresponding to the target domain training sample data based on the higher-layer feature of the target domain training sample data and a corresponding domain label; calculating, by using the second loss function, a second loss corresponding to the target domain training sample data based on the lower-layer feature of the target domain training sample data and a corresponding domain label; calculating, by using the third loss function, a third loss corresponding to the target domain training sample data based on the higher-layer feature of the target domain training sample data and a corresponding prediction sample label; calculating, based on the first loss, the second loss, and the third loss corresponding to the target domain training sample data, a total loss corresponding to the target domain training sample data, where gradient reversal processing is performed on a gradient of the first loss corresponding to the target domain training sample data; and updating the parameters of the feature extraction module, the task module, the domain-invariant feature module, and the domain discriminating feature module based on the total loss corresponding to the target domain training sample data and the weight of the target domain training sample data.

In another possible implementation of the first aspect, the calculating, by using the first loss function, a first loss corresponding to the target domain training sample data based on the higher-layer feature of the target domain training sample data and a corresponding domain label includes: inputting the higher-layer feature of the target domain training sample data into the domain-invariant feature module to obtain the first result corresponding to the target domain training sample data; and calculating, by using the first loss function, the first loss corresponding to the target domain training sample data based on a first result corresponding to the target domain training sample data and the corresponding domain label;
the calculating, by using the second loss function, a second loss corresponding to the target domain training sample data based on the lower-layer feature of the target domain training sample data and a corresponding domain label includes: inputting the lower-layer feature of the target domain training sample data into the domain discriminating feature module to obtain the second result corresponding to the target domain training sample data; and calculating, by using the second loss function, the second loss corresponding to the target domain training sample data based on the second result corresponding to the target domain training sample data and the corresponding domain label; and
the calculating, by using the third loss function, a third loss corresponding to the target domain training sample data based on the higher-layer feature of the target domain training sample data and a corresponding prediction sample label includes: inputting the higher-layer feature of the target domain training sample data into the task module to obtain the third result corresponding to the target domain training sample data; and calculating, by using the third loss function, the third loss corresponding to the target domain training sample data based on the third result corresponding to the target domain training sample data and the corresponding prediction sample label.

According to a second aspect, this application provides a training device, and the training device includes a memory and a processor coupled to the memory. The memory is configured to store an instruction, and the processor is configured to execute the instruction. When executing the instruction, the processor performs the method described in the first aspect and the possible implementations of the first aspect.

According to a third aspect, this application provides a computer-readable storage medium, and the computer-readable storage medium stores a computer program. When the computer program is executed by a processor, the method described in the seventh aspect and the possible implementations of the seventh aspect is implemented.

According to a fourth aspect, this application provides a computer program product, and the computer program product includes code used to perform the method described in the first aspect and the possible implementations of the first aspect.

According to a fifth aspect, this application provides a training apparatus, and the training apparatus includes a functional unit configured to perform the method described in the first aspect and the possible implementations of the first aspect.

According to a sixth aspect, this application provides an enhanced collaborative adversarial network constructed based on a convolutional neural network CNN. The enhanced collaborative adversarial network includes a feature extraction module, a task module, a domain invariant module, and a domain discriminating module. The feature extraction module is configured to extract a lower-layer feature and a higher-layer feature of the sample data in each of source domain data and target domain data, and data distribution of the target domain data is different from that of the source domain data. The task module is configured to: receive the higher-layer feature output by the feature extraction module, and calculate, by using a third loss function, a third loss corresponding to the sample data, and the third loss is used to update parameters of the feature extraction module and the task module. The domain invariant module is configured to: receive the higher-layer feature output by the feature extraction module, and calculate, by using a first loss function, a first loss corresponding to the sample data. The first loss is used to update parameters of the feature extraction module and the domain invariant module, so that the higher-layer feature output by the feature extraction module has domain invariance. The domain discriminating module is configured to: receive the lower-layer feature output by the feature extraction module, and calculate, by using a second loss function, a second loss corresponding to the sample data. The second loss is used to update parameters of the feature extraction module and the domain discriminating module, so that the lower-layer feature output by the feature extraction module has domain discriminating.

In a possible implementation of the sixth aspect, the enhanced collaborative adversarial network further includes a sample data selection module. The sample data selection module is configured to select target domain training sample data from the target domain data based on confidence corresponding to the sample data in the target domain data. The confidence corresponding to the sample data in the target domain data is obtained by inputting the higher-layer feature of the sample data in the target domain data into the task module. The target domain training sample data is sample data that is in the target domain data and whose corresponding confidence satisfies a preset condition.

In another possible implementation of the sixth aspect, the sample data selection module is further configured to: set an adaptive threshold based on precision of a task model. The task model includes the feature extraction module and the task module. The adaptive threshold is positively correlated to the precision of the task model. The preset condition is that the confidence is greater than or equal to the adaptive threshold.

In another possible implementation of the sixth aspect, the enhanced collaborative adversarial network further includes a weight setting module. The weight setting module is configured to set a weight of the target domain training sample data based on a first result corresponding to the target domain training sample data.

In another possible implementation of the sixth aspect, the weight setting module is specifically configured to: set the weight of the target domain training sample data based on a similarity between the first result corresponding to the target domain training sample data and a domain label. The similarity indicates a difference between the first result and the domain label.

In another possible implementation of the sixth aspect, the weight setting module is specifically configured to: calculate a first difference between the first result corresponding to the target domain training sample data and a domain label of a source domain, and a second difference between the first result corresponding to the target domain training sample data and a domain label of a target domain; and if an absolute value of the first difference is greater than an absolute value of the second difference, setting the weight of the target domain training sample data to a smaller value, otherwise, setting the weight of the target domain training sample data to a larger value.

In another possible implementation of the sixth aspect, the weight setting module is specifically configured to: if the first result corresponding to the target domain training sample data is an intermediate value between a first domain label value and a second domain label value, set the weight of the target domain training sample data to a maximum value, for example, 1. The first domain label value is a value corresponding to a domain label of a source domain, and the second domain label value is a value corresponding to a domain label of a target domain. For descriptions of the intermediate value, refer to related descriptions in the first aspect. Details are not described herein again.

According to a seventh aspect, this application provides a weight setting method for training data based on a collaborative adversarial network. The collaborative adversarial network includes at least a feature extraction module, a task module, and a domain invariant module, and may further include a domain discriminating module. For each module, refer to related descriptions in the sixth aspect. Details are not described herein again. The weight setting method includes: inputting a higher-layer feature of sample data in target domain data into the task module to obtain a corresponding prediction sample label and corresponding confidence; selecting target domain training sample data from the target domain data based on the confidence corresponding to the sample data in the target domain data, where the target domain training sample data is sample data that is in the target domain data and whose corresponding confidence satisfies a preset condition; inputting the higher-layer feature of the sample data in the target domain data into the domain invariant module to obtain a first result of the target domain training sample data; and setting a weight of the target domain training sample data based on the first result of the target domain training sample data.

In a possible implementation of the seventh aspect, the setting a weight of the target domain training sample data based on a first result corresponding to the target domain training sample data specifically includes: setting the weight of the target domain training sample data based on similarity between the first result corresponding to the target domain training sample data and a domain label. The similarity indicates a value of a difference between the first result and the domain label.

In another possible implementation of the seventh aspect, the setting the weight of the target domain training sample data based on similarity between the first result corresponding to the target domain training sample data and a domain label includes: calculating a first difference between the first result corresponding to the target domain training sample data and a domain label of a source domain, and a second difference between the first result corresponding to the target domain training sample data and a domain label of a target domain; and if an absolute value of the first difference is greater than an absolute value of the second difference, setting the weight of the target domain training sample data to a smaller value, for example, a value less than 0.5, otherwise, setting the weight of the target domain training sample data to a larger value, for example, a value greater than 0.5.

In another possible implementation of the seventh aspect, if the first result corresponding to the target domain training sample data is an intermediate value between a first domain label value and a second domain label value, the weight of the target domain training sample data is set to a maximum value (for example, 1). There is an example of the intermediate value. For example, the first domain label value is 0, the second domain label value is 1, and the intermediate value is 0.5 or a value in a floating interval of 0.5. The first domain label value is a value corresponding to a domain label of a source domain, and the second domain label value is a value corresponding to a domain label of a target domain.

In another possible implementation of the seventh aspect, before the selecting target domain training sample data from the target domain data based on the confidence corresponding to the sample data in the target domain data, the weight setting method further includes: setting an adaptive threshold based on precision of a task model, where the task model includes the feature extraction module and the task module, the adaptive threshold is positively correlated to the precision of the task model, and the preset condition is that the confidence is greater than or equal to the adaptive threshold.

The adaptive threshold is calculated by using the following logical function: ${T}_{c} = \frac{1}{1 + {e}^{- {λ}_{c} ∗ A}} ,$ where
*T_{c}* is the adaptive threshold, A is the precision of the task model, and *λ_{c}* is a hyperparameter used to control an inclination degree of the logical function.

According to an eighth aspect, this application provides a device, and the device includes a memory and a processor coupled to the memory. The memory is configured to store an instruction, and the processor is configured to execute the instruction. When executing the instruction, the processor performs the method described in the seventh aspect and the possible implementations of the seventh aspect.

According to a ninth aspect, this application provides a computer-readable storage medium, and the computer-readable storage medium stores a computer program. When the computer program is executed by a processor, the method described in the seventh aspect and the possible implementations of the seventh aspect is implemented.

According to a tenth aspect, this application provides a computer program product, and the computer program product includes code used to perform the method described in the seventh aspect and the possible implementations of the seventh aspect.

According to an eleventh aspect, this application provides a weight setting apparatus, and the weight setting apparatus includes a function unit configured to perform the method described in the seventh aspect and the possible implementations of the seventh aspect.

According to the training method provided in this embodiment of this application, the domain invariant loss function and the domain discriminating loss function are separately established based on the higher-layer feature and the lower-layer feature, so as to ensure the domain-invariant feature of the higher-layer feature and retain the domain discriminating feature of the lower-layer feature, which can improve prediction precision when the task model obtained by training is applied to the target domain.

### BRIEF DESCRIPTION OF DRAWINGS

To describe the technical solutions in embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a method for training an image classifier based on unsupervised domain adaptation according to an embodiment of the present invention;
FIG. 2 is a schematic diagram of an artificial intelligence main framework according to an embodiment of the present invention;
FIG. 3 is a schematic diagram of human-vehicle image data comparison in different cities according to an embodiment of the present invention;
FIG. 4 is a schematic diagram of face image data comparison in different regions according to an embodiment of the present invention;
FIG. 5 is a schematic diagram of training system architecture according to an embodiment of the present invention;
FIG. 6 is a schematic diagram of a feature extraction unit according to an embodiment of the present invention;
FIG. 7 is a schematic diagram of a feature extraction CNN according to an embodiment of the present invention;
FIG. 8 is a schematic diagram of a domain-invariant feature unit according to an embodiment of the present invention;
FIG. 9 is a schematic structural diagram of a training apparatus according to an embodiment of the present invention;
FIG. 10 is a schematic structural diagram of another training apparatus according to an embodiment of the present invention;
FIG. 11 is a schematic diagram of a cloud system architecture according to an embodiment of the present invention;
FIG. 12 is a flowchart of a training method according to an embodiment of the present invention;
FIG. 13 is a schematic diagram of a training method based on a cooperative adversarial network according to an embodiment of the present invention;
FIG. 14 is a schematic diagram of a weight setting curve according to an embodiment of the present invention;
FIG. 15 is a schematic structural diagram of hardware of a chip according to an embodiment of the present invention;
FIG. 16 is a schematic structural diagram of a training device according to an embodiment of the present invention;
FIG. 17A is a test result on Office-31 according to an embodiment of the present invention; and
FIG. 17B is a test result on ImageCLEF-DA according to an embodiment of the present invention.

### DESCRIPTION OF EMBODIMENTS

The following describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

FIG. 2 is a schematic diagram of an artificial intelligence main framework. The main framework describes an overall working procedure of an artificial intelligence system, and is applicable to a requirement of a general artificial intelligence field.

The following describes the foregoing artificial intelligent main framework from two dimensions: "intelligent information chain" (the horizontal axis) and "IT value chain" (the vertical axis).

"Intelligent information chain" reflects a process from obtaining data to processing the data. For example, the process may be a general process of intelligent information perception, intelligent information representation and formation, intelligent inference, intelligent decision-making, and intelligent execution and output. In this process, the data undergoes a coagulation process of "data-information-knowledge-intelligence".

"IT value chain" reflects a value of the information technology industry from an underlying infrastructure and information (providing and processing technology implementation) of human intelligence to a process of industrial ecology of a system.

### (1) Infrastructure:

The infrastructure provides computing capability support for the artificial intelligence system, communicates with an external world, and supporting is implemented by using a base platform. The infrastructure communicates with the outside by using a sensor. A computing capability is provided by an intelligent chip (a hardware acceleration chip such as a CPU, an NPU, a GPU, an ASIC, or an FPGA). The base platform includes related platform assurance and support such as a distributed computing framework and a network, and may include cloud storage and computing, and an interconnection and interworking network, and the like. For example, the sensor communicates with the outside to obtain data, and the data is provided, for computation, to an intelligent chip in a distributed computing system provided by the base platform.

### (2) Data

Data at an upper layer of the infrastructure is used to indicate a data source in the artificial intelligence field. The data relates to a graph, an image, a voice, and text, further relates to internet of things data of a conventional device, and includes service data of an existing system and perception data such as force, displacement, a liquid level, a temperature, and humidity.

### (3) Data processing

Data processing usually includes manners such as data training, machine learning, deep learning, searching, inference, and decision-making.

Machine learning and deep learning may be used to perform symbolic and formal intelligent information modeling, extraction, preprocessing, training, and the like on data.

Inference refers to a process in which a human intelligent inference manner is simulated on a computer or in an intelligent system, and machine thinking and problem solving are performed by using formal information according to an inference control policy. Atypical function is searching and matching.

Decision-making refers to a process in which a decision is made after intelligent information is inferred, and usually provides functions such as classification, ranking, and prediction.

### (4) General capabilities

After data processing mentioned above is performed on data, some general capabilities may be further formed based on a data processing result, for example, an algorithm or a general system, such as translation, text analysis, computer vision processing, speech recognition, and image recognition.

### (5) Intelligent product and industry application

Intelligent products and industry applications refer to products and applications of the artificial intelligence system in various fields, and are package of an overall solution of the artificial intelligence. Decision making for intelligent information is productized and an application is implemented. Application fields mainly include: intelligent manufacturing, intelligent transportation, smart home, smart healthcare, intelligent security protection, automatic driving, a safe city, an intelligent terminal, and the like.

### Related descriptions of important concepts in this application

Unsupervised domain adaptation: The unsupervised domain adaptation is a typical method for transfer learning. A task model is trained based on data in a source domain and a target domain. Recognition/classification/segmentation/detection and the like of an object in the target domain are implemented by using a trained task model. The data in the source domain has a label, however, the data in the target domain has no label. Distribution of the data in the two domains is different. It should be noted that in this application, "data in a source domain" usually has a same meaning as "source domain data", and "data in a target domain" usually has a same meaning as "target domain data".

Domain-invariant feature: The domain-invariant feature is a general feature of data in different domains, and features extracted from the data in different domains have consistent distribution.

Domain discriminating feature: The domain discriminating feature is a feature of data in a specific field. Features extracted from data in different fields are distributed differently.

This application describes a neural network training method, and the training method is applied to training of a task/prediction model (referred to as a task model below) in the transfer learning field. Specifically, the method may be applied to training various task models constructed based on a deep neural network, including but not limited to a classification model, a recognition model, a segmentation model, and a detection model. Task models obtained by using the training method described in this application may be widely applied to a plurality of specific application scenarios such as AI photographing, automatic driving, and a safe city, to implement intelligence of the application scenarios.

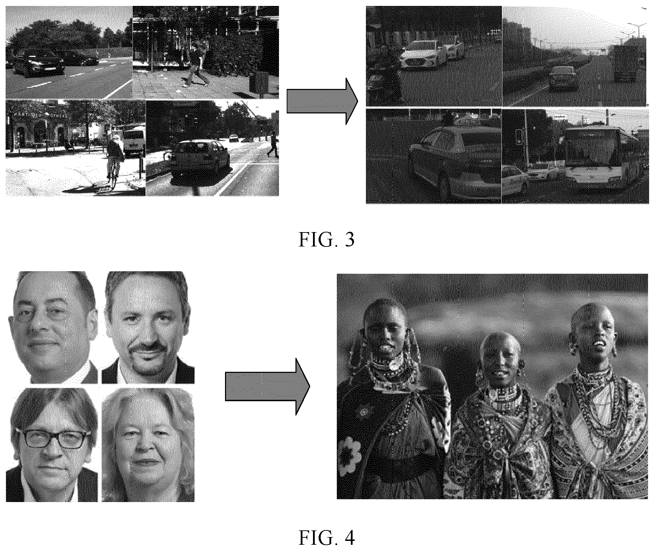

In an example of human-vehicle detection in an automatic driving application scenario, the human-vehicle detection is a basic unit in an automatic driving perception system. Precision of the human-vehicle detection affects safety of a self-driving vehicle. A key to precisely detecting a pedestrian and a vehicle around the vehicle is whether there is a high-precision detection model used for the human-vehicle detection. However, the high-precision detection model depends on a large quantity of labeled human-vehicle image/video data. Labeling data is a complicated project. To meet precision required in automatic driving, it is almost necessary to label different data for different cities. This is difficult to implement. To improve training efficiency, transfer of the human-vehicle detection model is a most commonly used method. To be specific, a detection model trained by using a human-vehicle image/video data labeled based on an area A is directly applied to human-vehicle detection in an area B scenario in which there is no or insufficient labeled human-vehicle image/video data. The area A herein is a source domain, and the area B is a target domain. Data in the area A is labeled source domain data, and data in the area B is unlabeled target domain data. However, for example, there may be great differences between people, life habits, building styles, climate environments, transportation facilities, and the like in different cities, and data collection devices, in other words, there are different kinds of data distribution. It is difficult to ensure precision required in automatic driving. As shown in FIG. 3, four images on the left are image data collected by a collection device in a European city, and four images on the right are image data collected by a collection device in an Asian city. It can be learned that there are obvious differences between skin, wears, and postures of pedestrians, and urban buildings and driving appearances also differ obviously. If a detection model trained based on image/video data of a city in FIG. 3 is applied to another city scenario in FIG. 3, precision of the detection model is inevitably reduced greatly. According to the training method described in this application, a task model is trained by using both labeled data and unlabeled data. To be specific, a detection model used for human-vehicle detection is trained by using both the labeled human-vehicle image/video data in the area A and the unlabeled human-vehicle image/video data in the area B, which can greatly improve the precision of human-vehicle detection in the area B scenario to which the detection model trained based on the human-vehicle image/video data in the area A is applied.

Further, an application scenario of face recognition is used as an example, face recognition usually includes recognition of persons in different countries and regions, and there is a relatively large distribution difference between face data of the persons in the different countries and regions. As shown in FIG. 4, it is assumed that face data that is of a European white person and that is with a training label is used as source domain data, namely, labeled face data, and face data that is of an African black person and that is without training label is used as target domain data, namely, unlabeled face data. There is a great difference between skin colors, facial contours, and the like of a white person and a black person, which resulting that face data is distributed differently. However, even if the face data of the black person is unlabeled data, a face recognition model obtained by using the training method described in this application can also improve face recognition accuracy of the black person.

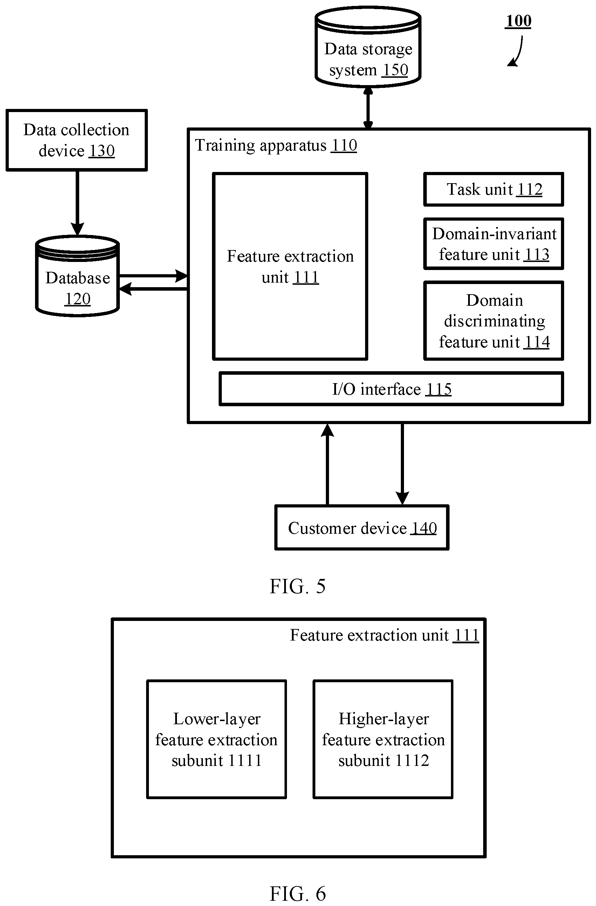

An embodiment of the present invention provides a deep neural network training system architecture 100. As shown in FIG. 5, the system architecture 100 includes at least a training apparatus 110 and a database 120, and further includes a data collection device 130, a customer device 140, and a data storage system 150.

The data collection device 130 is configured to collect data and store the collected data (for example, an image/video/audio) into the database 120 as training data. The database 120 is configured to maintain and store the training data. The training data stored in the database 120 includes source domain data and target domain data. The source domain data may be understood as labeled data. The target domain data may be understood as unlabeled data. A source domain and a target domain are relative concepts in the transfer learning field. For details, refer to corresponding descriptions in FIG. 3 and FIG. 4 to understand the source domain, the target domain, the source domain data, and the target domain data. The foregoing concepts can be understood by a person skilled in the art. The training apparatus 110 interacts with the database 120, obtains required training data from the database 120, and is used to train a task model. The task model includes a feature extraction module and a task module. The feature extraction module may be a feature extraction unit 111, or may be a deep neural network constructed by using parameters of the trained feature extraction unit 111. Similarly, the task module may be a task unit 112, or may be a model, such as a function model or a neural network model, constructed by using parameters of the trained task unit 112. The training apparatus 110 may apply a trained task model to the customer device 140, or may output a prediction result in response to a request of the customer device 140. For example, the customer device 140 is a self-driving vehicle, and the training apparatus 110 trains a human-vehicle detection model based on the training data in the database 120. When the self-driving vehicle needs to perform human-vehicle detection, the human-vehicle detection may be complete and fed back to the self-driving vehicle by a human-vehicle detection model obtained by the training apparatus 110. The trained human-vehicle detection model may be disposed on the self-driving vehicle, or may be disposed on a cloud. A specific form is not limited. The customer device 140 may also be used as a data collection device of the database 120 to extend the database if necessary.

The training apparatus 110 includes the feature extraction unit 111, the task unit 112, a domain-invariant feature unit 113, a domain discriminating feature unit 114, and an I/O interface 115. The /O interface 115 is used for interaction between the training device 110 and an external device.

The feature extraction unit 111 is configured to extract a lower-layer feature and a higher-layer feature of input data. As shown in FIG. 6, the feature extraction unit 111 includes a lower-layer feature extraction subunit 1111 and a higher-layer feature extraction subunit 1112. The lower-layer feature extraction subunit 1111 is configured to extract the lower-layer feature of the input data. The higher-layer feature extraction subunit 1112 is configured to extract the higher-layer feature of the input data. Specifically, after data is input into the lower-layer feature extraction subunit 1111, data indicating the lower-layer feature is obtained. Then, after the data indicating the lower-layer feature is input into the higher-layer feature extraction subunit 1112, data indicating the higher-layer feature is obtained, namely, the higher-layer feature is a feature obtained by further processing based on the lower-layer feature.

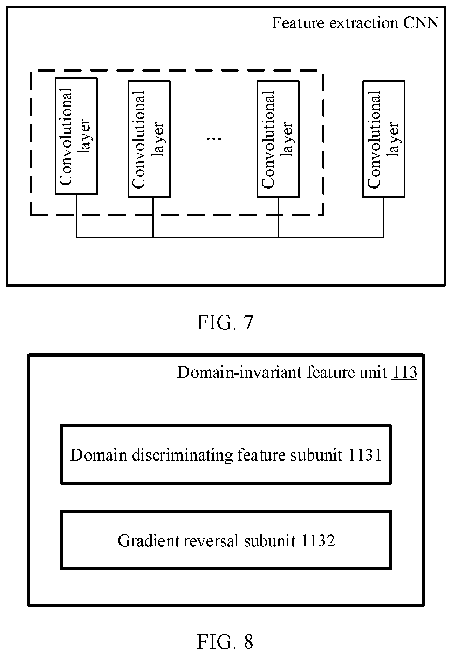

The feature extraction unit 111 may be implemented by software, hardware (such as a circuit), or a combination of software and hardware (such as a processor call code). A function of the feature extraction unit 111 is usually implemented by using a neural network. Optionally, the function of the feature extraction unit 111 is implemented by using a convolutional neural network (Convosutionas Neuras Network, CNN). As shown in FIG. 7, a feature extraction CNN includes a plurality of convolutional layers. Feature extraction of input data may be implemented through convolution calculation. The last convolutional layer of the plurality of convolutional layers may be referred to as a higher-layer convolutional layer, and is used as the higher-layer feature extraction subunit 1112 to extract the higher-layer feature. The other convolutional layers may be referred to as lower-layer convolutional layers, and are used as the lower-layer feature extraction subunit 1111 to extract the lower-layer feature. Each lower-layer convolutional layer may output one lower-layer feature. To be specific, after a piece of data is input into the CNN that is used as the feature extraction unit 111, one higher-layer feature and at least one lower-layer feature may be output. A quantity of lower-layer features may be set based on an actual training requirement. Specific output is formulated and used for the lower-layer convolutional layer that is used as the lower-layer feature extraction subunit 1111 to output the lower-layer feature.

The convolutional neural network (Convosutionas Neuras Network, CNN) is a deep neural network with a convolutional structure. The convolutional neural network includes a feature extractor including a convolutional layer and a sub sampling layer. The feature extractor may be considered as a filter. A convolution process may be considered as performing convolution by using a trainable filter and an input image or a convolution feature map (feature map). The convolutional layer is a neuron layer that is in the convolutional neural network and that performs convolution processing on an input signal. At the convolutional layer in the convolutional neural network, a neuron may be connected only to some adjacent-layer neurons. One convolutional layer usually includes several feature maps, and each feature map may include some rectangular arranged neural units. Neural units on a same feature map share a weight. The shared weight herein is a convolution kernel. Weight sharing may be understood as that an image information extraction manner is irrelevant to a location. The principle implied herein is that statistical information of a part of an image is the same as that of another part. To be specific, image information that is learned in a part can also be used to another part. Therefore, image information obtained through same learning can be used for all locations in the image. In a same convolutional layer, a plurality of convolution kernels may be used to extract different image information. Usually, a larger quantity of convolution kernels indicates richer image information reflected by a convolution operation.

A convolution kernel may be initialized in a form of a random-size matrix. An appropriate weight may be obtained by a convolution kernel through learning in a convolutional neural network training process. In addition, a direct benefit brought by weight sharing is to reduce a connection between layers of the convolutional neural network, and further reduce an overfitting risk.

The convolutional neural network may correct a parameter in an initial super-resolution model in a training process by using an error back propagation (back propagation, BP) algorithm, so that an error loss of reconstructing the super-resolution model becomes small. Specifically, the error loss may occur during forward propagation from signal inputting to outputting, and the parameter in the initial super-resolution model is updated by using back propagation error loss information, so that the error loss is converged. The back propagation algorithm is an error-loss-centered backpropagation processing intended to obtain a parameter, such as a weight matrix, of an optimal super-resolution model.

The higher-layer feature output by the higher-layer feature extraction subunit 1112 is input into the task unit 112. Specifically, labeled source domain data is processed by the feature extraction unit 111 to output the higher-layer feature, and then a label is output. The trained task unit 112 and the feature extraction unit 111 may be used as a task model, and the task model may be used for a forecasting task in the target domain.

The higher-layer feature output by the high-layer feature extraction subunit 1112 is input into the domain-invariant feature unit 113, and a domain (the source domain or the target domain) label corresponding to the data is output. As shown in FIG. 8, the domain-invariant feature subunit 113 includes a domain discriminating feature subunit 1131 and a gradient reverse subunit 1132. The gradient reverse subunit 1132 may perform gradient inversion on a gradient in back propagation, so that an error (that is, a loss) between a domain label output by the domain discriminating feature subunit 1131 and a real domain label becomes larger. The domain-invariant feature extraction unit 113 may implement that the higher-layer feature output by the feature extraction unit 111 is invariant in domain, in other words, reduce a risk that the higher-layer feature output by the feature extraction unit 111 is difficult or impossible to discriminate domains.

The lower-layer feature output by the lower-layer feature extraction subunit 1111 is input into the domain discriminating feature unit 114, and a domain label to which corresponding data belongs is output. The domain discriminating feature unit 114 can enable the lower-layer feature output by the feature extraction unit 111 to easily discriminate domains, so that the lower-layer feature has domain discriminating.

It should be noted that both the domain discriminating feature unit 114 and the domain discriminating feature subunit 1131 may output a domain to which an input feature belongs. A main difference between the domain-invariant feature unit 113 and the domain discriminating feature unit 114 lies in that the domain-invariant feature unit 113 further includes the gradient reverse subunit 1132. A domain discriminating model may include the domain discriminating feature unit 114 and the feature extraction unit 111. Similarly, the gradient reverse subunit 1132 is ignored, and a domain discriminating model may include the domain discriminating feature subunit 1131 in the domain-invariant feature unit 113 and the feature extraction unit 111.

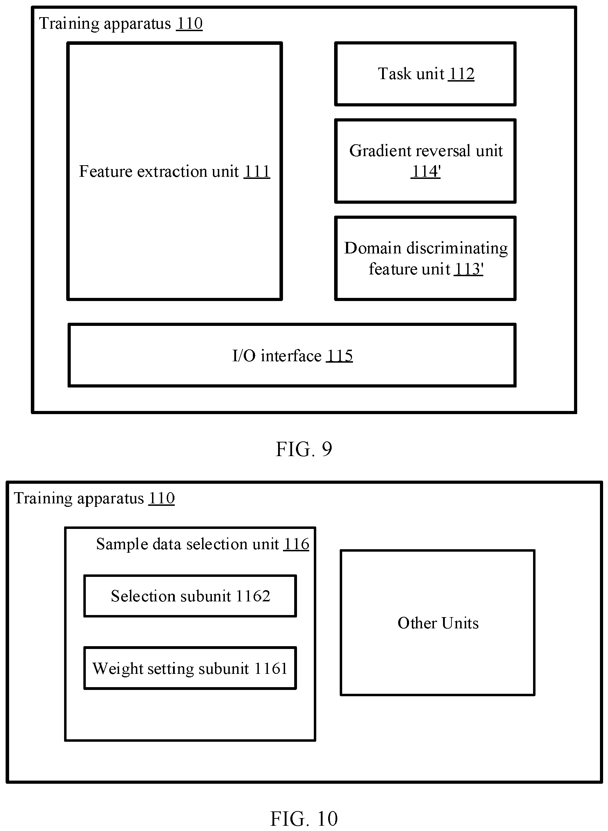

Optionally, the training apparatus 110 is a structure shown in FIG. 9. The training apparatus 110 includes a feature extraction unit 111, a task unit 112, a domain discriminating feature unit 113', a gradient reverse unit 114', and an I/O interface 115. The domain discriminating feature unit 113' and the gradient reverse unit 114' are equivalent to the domain-invariant feature unit 113 and the domain discriminating feature unit 114 in the training apparatus 110 in FIG. 5.

The task unit 112, the domain-invariant feature unit 113, the domain discriminating feature unit 114, the domain discriminating feature unit 113', and the gradient reverse unit 114' may be implemented by using software, hardware (such as a circuit), or a combination of software and hardware (such as processor call code), or may be specifically implemented by using a vector matrix, a function, a neural network, or the like. This is not limited. Each of the task unit 112, the domain-invariant feature unit 113, and the domain discriminating feature unit 114 includes a loss function for calculating a loss between an output value and a real value. The loss is used for updating a parameter in each unit. Specific update details are understandable by a person skilled in the art, and details are not described.

The training apparatus 110 includes the domain-invariant feature unit 113 and the domain discriminating feature unit 114. The lower-layer feature having domain discriminating and the output higher-layer feature having domain invariance that are output by the feature extraction unit 111 can be obtained by training of the source domain data and the target domain data. The higher-layer feature is further obtained based on the lower-layer feature, so that the higher-layer feature can still well reserve the domain discriminating feature, and is further used for the task model to improve prediction precision.

As shown in FIG. 10, the training apparatus 110 further includes a sample data selection unit 116. The sample data selection unit 116 is configured to select, from the target domain data, data that meets a condition as training sample data for training performed by the training apparatus 110. The sample data selection unit 116 specifically includes a selection subunit 1161 and a weight setting subunit 1162. The selection subunit 1161 is configured to select, from the target domain data based on precision of a task model, data that meets a condition, and add a corresponding label as the training sample data. The weight setting subunit 1162 is configured to set a weight for the selected target domain data that is used as the training sample data. Impact of the target domain data that is used as the training sample data on training of the task model is clear after weight setting. The following describes in detail how to select and set a weight, and details are not described herein. It should be noted that other units in FIG. 10 include the feature extraction unit 111, the task unit 112, the domain-invariant feature unit 113, the domain discriminating feature unit 114, and the I/O interface 115 in FIG. 5, or include the feature extraction unit 111, the task unit 112, the domain discriminating feature unit 113', the gradient reverse unit 114', and the I/O interface 115.

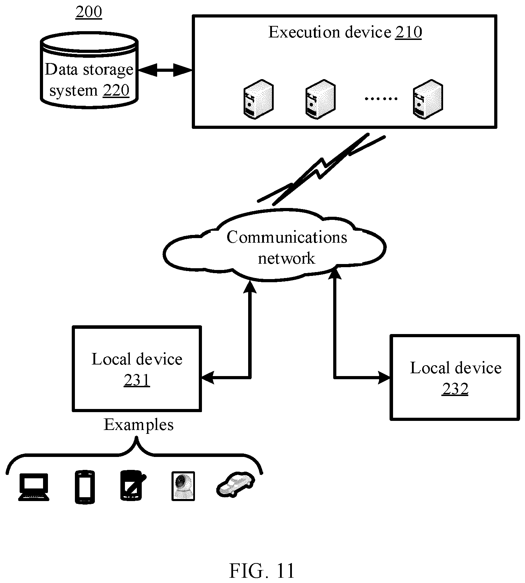

An embodiment of the present invention provides a cloud system architecture 200. As shown in FIG. 11, an execution device 210 is implemented by one or more servers, and optionally, cooperates with another computing device, such as a data storage device, a router, or a load balancer. The execution device 210 may be arranged on one physical site, or distributed across a plurality of physical sites. Optionally, the execution device 210 may implement all functions of the training apparatus 110 by using data in a data storage system 220 or by invoking program code in the data storage system 220. Specifically, the execution device 210 may train a task model based on the training data in the database 120, and complete task prediction in the target domain based on a request of a local device 231 (232). Optionally, the execution device 210 does not have a training function of the training apparatus 110, but may complete prediction based on a task model trained by the training apparatus 110. Specifically, after provided with the task model trained by the training apparatus 110, the execution device 210 completes prediction after receiving a request of the local device 231 (232), and feeds back a result to the local device 231 (232).

Users may separately operate the users' user equipment (for example, the local device 231 and the local device 232) to interact with the execution device 210. Each local device may represent any computing device such as a personal computer, a computer workstation, a smartphone, a tablet, an intelligent camera, a smart automobile, or another type of cellular telephones, media consumption devices, wearable devices, set-top boxes, and game consoles.

The local device of each user may interact with the execution device 210 through a communications network of any communication mechanism/communication standard. The communications network may be in a manner such as a wide area network, a local area network, or a point-to-point connection, or any combination thereof.

In another implementation, one or more aspects of the execution device 210 may be implemented by each local device. For example, the local device 301 may provide local data for the execution device 210 or feed back a computation result.

It should be noted that all functions of the execution device 210 may also be implemented by the local device. For example, the local device 231 implements a function (for example, training or prediction) of the execution device 210, and provides a service for a user of the local device 231, or provides a service for a user of the local device 232.

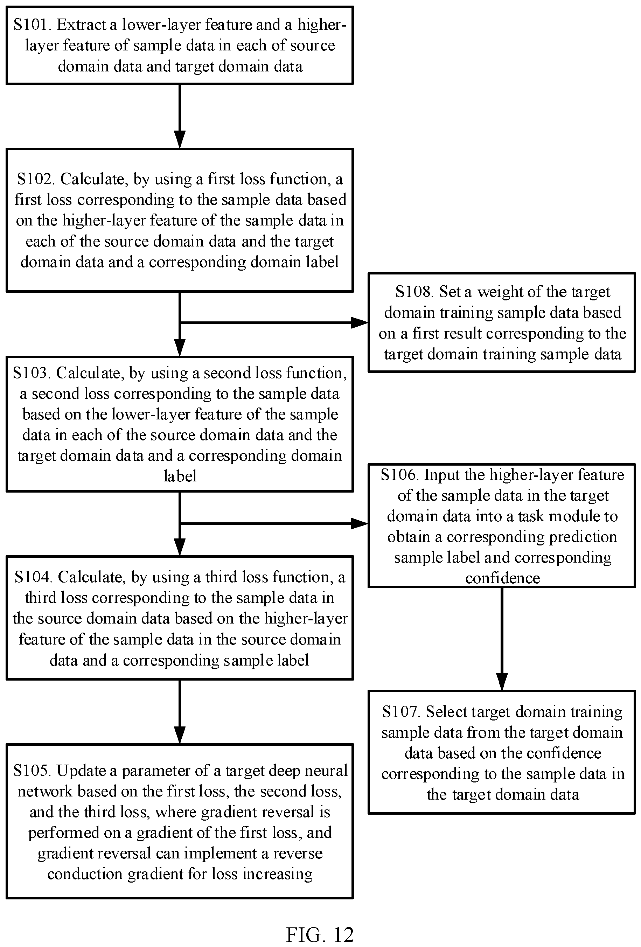

An embodiment of this application provides a method for training a target deep neural network. The target deep neural network is a general term of a system architecture, and specifically includes a feature extraction module (corresponding to a feature extraction unit 111), a task module (corresponding to a task unit 112), a domain-invariant feature module (corresponding to a domain-invariant feature unit 113), and a domain discriminating feature module (corresponding to a domain discriminating feature unit 114 or a domain discriminating feature unit 113'). The feature extraction module includes at least one lower-layer feature network layer (corresponding to a lower-layer feature extraction subunit 1111) and a higher-layer feature network layer (corresponding to a higher-layer feature extraction subunit 1112). Any one of the at least one lower-layer feature network layer may be used for extracting a lower-layer feature. The higher-layer feature network layer is used for extracting a higher-layer feature. The domain-invariant feature module is configured to enhance domain invariance of the higher-layer feature extracted by the feature extraction module. The domain discriminating feature module is configured to enhance domain discriminating of the lower-layer feature extracted by the feature extraction module. As shown in FIG. 12, the training method includes the following specific steps.

S101. Extract a lower-layer feature and a higher-layer feature of sample data in each of source domain data and target domain data, where data distribution of the target domain data is different from that of the source domain data.

Specifically, the lower-layer feature corresponding to the sample data in each of the source domain data and the target domain data is extracted by using the lower-layer feature network layer. The higher-layer feature corresponding to the sample data in each of the source domain data and the target domain data is extracted by using the higher-layer feature network layer.

S102. Calculate, by using a first loss function, a first loss corresponding to the sample data based on the higher-layer feature of the sample data in each of the source domain data and the target domain data and a corresponding domain label. Specifically, the higher-layer feature of the sample data in each of the source domain data and the target domain data is input into the domain-invariant feature module to obtain a first result corresponding to the sample data; and the first loss corresponding to the sample data is calculated by using the first loss function based on the first result corresponding to the sample data in each of the source domain data and the target domain data and the corresponding domain label.

Further, the domain-invariant feature module includes a gradient reversal module (corresponding to a gradient inverse subunit). The training method further includes: performing gradient reversal processing on a gradient of the first lost by using the gradient reversal module. Any existing technology, for example, a gradient reversal layer (GRL), may be used for gradient reversal.

S103. Calculate, by using a second loss function, a second loss corresponding to the sample data based on the lower-layer feature of the sample data in each of the source domain data and the target domain data and a corresponding domain label.

Specifically, the lower-layer feature of the sample data in each of the source domain data and the target domain data is input into the domain discriminating feature module to obtain a second result corresponding to the sample data; and the second loss corresponding to the sample data is calculated by using the second loss function based on the second result corresponding to the sample data in each of the source domain data and the target domain data and the corresponding domain label.

S104. Calculate, by using a third loss function, a third loss corresponding to the sample data in the source domain data based on the higher-layer feature of the sample data in the source domain data and a corresponding sample label.

Specifically, the higher-layer feature of the sample data in the source domain data is input into the task module to obtain a third result corresponding to the sample data in the source domain data; and the third loss corresponding to the sample data in the source domain data is calculated by using the third loss function based on the third result corresponding to the sample data in the source domain data and the corresponding sample label.

S105. Update a parameter of the target deep neural network based on the first loss, the second loss, and the third loss, where gradient reversal is performed on the gradient of the first loss, and gradient reversal can implement a reverse conduction gradient for loss increasing.

Specifically, a total loss is calculated based on the first loss, the second loss, and the third loss.

Parameters of the feature extraction module, the task module, the domain-invariant feature module, and the domain discriminating feature module are updated based on the total loss.

After training, the feature extraction module and the task module are used as a task model. The task model is used for a prediction task in a target domain. Certainly, the task model may also be used for a prediction task in a source domain.

Further, the training method includes the following step.

S 106. Input the higher-layer feature of the sample data in the target domain data into the task module to obtain a corresponding prediction sample label and corresponding confidence.

S 107. Select target domain training sample data from the target domain data based on the confidence corresponding to the sample data in the target domain data, where the target domain training sample data is sample data that is in the target domain data and whose corresponding confidence satisfies a preset condition.

Specifically, an adaptive threshold is set based on precision of the task model. The task model includes the feature extraction module and the task module. The adaptive threshold is positively correlated to the precision of the task model. The preset condition is that the confidence is greater than or equal to the adaptive threshold.

Optionally, the adaptive threshold is calculated by using the following logical function: ${T}_{c} = \frac{1}{1 + {e}^{- {λ}_{c} ∗ A}} ,$ where
*T_{c}* is the adaptive threshold, A is the precision of the task model, and *λ_{c}* is a hyperparameter used to control an inclination degree of the logical function.

S108. Set a weight of the target domain training sample data based on a first result corresponding to the target domain training sample data.

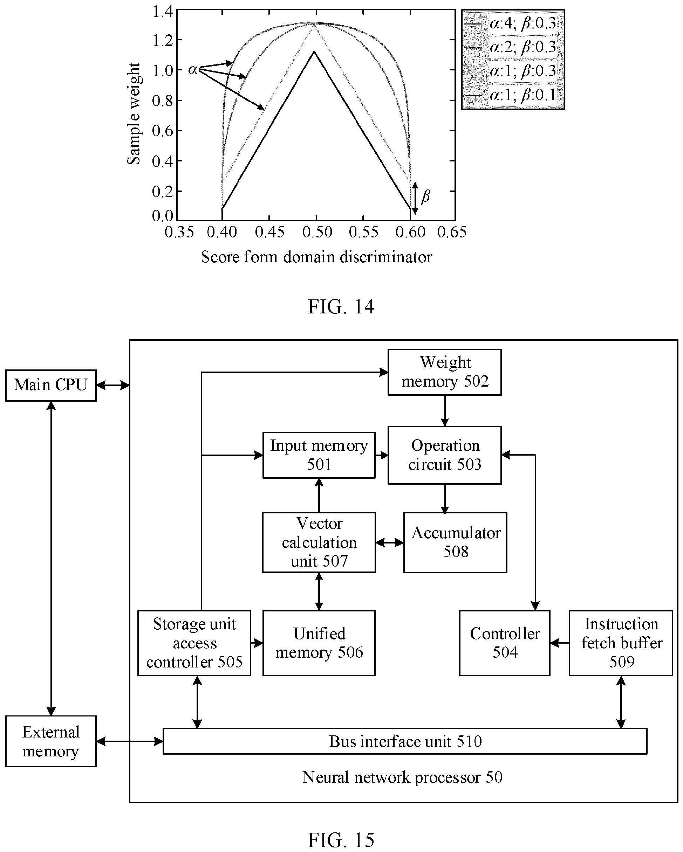

Specifically, based on a predicted value (corresponding to the first result) that is output by the domain discriminating feature subunit 1131, a similarity between the predicted value and distribution of the source domain data or the target domain data is determined; and the weight of the target domain sample is set based on the similarity. The similarity may be represented by a difference between the predicted value and a domain label. Specifically, values are respectively preset for a source domain label and a target domain label. For example, a domain label of a source domain (which may be referred to as the source domain label for short) is set to a, and a domain label of a target domain (which may be referred to as the target domain label for short) is set to b. In this case, the predicted value x ranges from a to b. The similarity may be determined based on values of |x - a| and |x - b|. A smaller absolute difference indicates a larger (that is, closer) similarity. There are two schemes for weight setting: (1) A smaller weight is set when the predicted value is closer to the value of the source domain label. A larger weight is set if the predicted value is an intermediate value between the value of the source domain label and the value of the target domain label. (2) A smaller weight is set when the predicted value is closer to the value of the source domain label. A larger weight is set if an output value is closer to the value of the target domain label. The smaller weight is relative to the larger weight. A specific value may be determined based on actual setting. A relationship between a weight and a similarity may be briefly summarized as follows: When the predicted value is closer to the value of the source domain label, the corresponding weight is smaller. In other words, if it is determined, based on the predicted value, that the corresponding target domain training sample data is more likely to be the source domain data, the weight of the target domain training sample data is set to a smaller value, otherwise, the weight may be set to a larger value. For value setting, refer to related descriptions in an embodiment corresponding to FIG. 14.

In addition to the domain label, the target domain training sample data selected according to the steps S 106 to S 108 further includes the prediction sample label and the weight. The selected target domain training sample data may be used for training. In other words, it is equivalent to that the steps S101 to S105 are performed again on the source domain data. The training method further includes the following steps performed on the target domain training sample data:
(1) A lower-layer feature and a higher-layer feature of the target domain training sample data are extracted by using the feature extraction module.
(2) A first loss corresponding to the target domain training sample data is calculated by using the first loss function based on the higher-layer feature of the target domain training sample data and a corresponding domain label. Specifically, the higher-layer feature of the target domain training sample data is input into the domain-invariant feature module to obtain a first result corresponding to the target domain training sample data; and the first loss corresponding to the target domain training sample data is calculated by using the first loss function based on a first result corresponding to the target domain training sample data and the corresponding domain label.
(3) A second loss corresponding to the target domain training sample data is calculated by using the second loss function based on the lower-layer feature of the target domain training sample data and a corresponding domain label. Specifically, the lower-layer feature of the target domain training sample data is input into the domain discriminating feature module to obtain a second result corresponding to the target domain training sample data; and the second loss corresponding to the target domain training sample data is calculated by using the second loss function based on the second result corresponding to the target domain training sample data and the corresponding domain label.
(4) A third loss corresponding to the target domain training sample data is calculated by using the third loss function based on the higher-layer feature of the target domain training sample data the corresponding prediction sample label. Specifically, the higher-layer feature of the target domain training sample data is input into the task module to obtain a third result corresponding to the target domain training sample data; and the third loss corresponding to the target domain training sample data is calculated by using the third loss function based on the third result corresponding to the target domain training sample data and the corresponding prediction sample label.
(5) A total loss corresponding to the target domain training sample data is calculated based on the first loss, the second loss, and the third loss corresponding to the target domain training sample data. Gradient reversal processing is performed on a gradient of the first loss corresponding to the target domain training sample data.
(6) The parameters of the feature extraction module, the task module, the domain-invariant feature module, and the domain discriminating feature module are updated based on the total loss corresponding to the target domain training sample data and the weight of the target domain training sample data.

All steps described in the embodiment corresponding to FIG. 12 may be performed by the training apparatus 110 or only the execution device 210, or may be performed by a plurality of apparatuses or devices. Each apparatus or device performs some steps described in the embodiment corresponding to FIG. 12. For example, all steps described in the embodiment corresponding to FIG. 12 are performed by the training apparatus 110. It may be understood that the selected target domain training sample data is used as labeled training data (including the sample label and the domain label), parameters of units in the training apparatus 110 when the selected target domain training sample data is input into the training apparatus 110 are not completely same as the parameters for obtaining the prediction label of the target domain training sample data. In this case, the parameters of the units in the training apparatus 110 may be updated at least once.

According to the training method provided in this embodiment of this application, both the task model and a domain discriminating model are actually trained. The task model includes the feature extraction module and the task module, and is a model for a specific task. The domain discriminating model includes the feature extraction module and the domain discriminating feature module, and is used to discriminate a belonging domain. To be specific, the domain discriminating model provides input data a domain (the source domain or the target domain) to which the data belongs. A label used for training by the domain discriminating model is the domain label. For example, a domain label of the source domain data is set to 0, and a domain label of the target domain data is set to 1. It should be noted that the domain discriminating feature module in the domain discriminating model may be the domain discriminating feature unit 114 or the domain discriminating feature unit 113'.

It should be noted that the foregoing step numbers do not specify that the steps are performed in a numbering sequence, but for ease of reading. There is a logical sequence between the steps, and the logical sequence may be specifically determined according to the technical solution. Therefore, the numbers are not a limitation on the method procedure. Likewise, the numbers in FIG. 12 are not a limitation on the method procedure either.

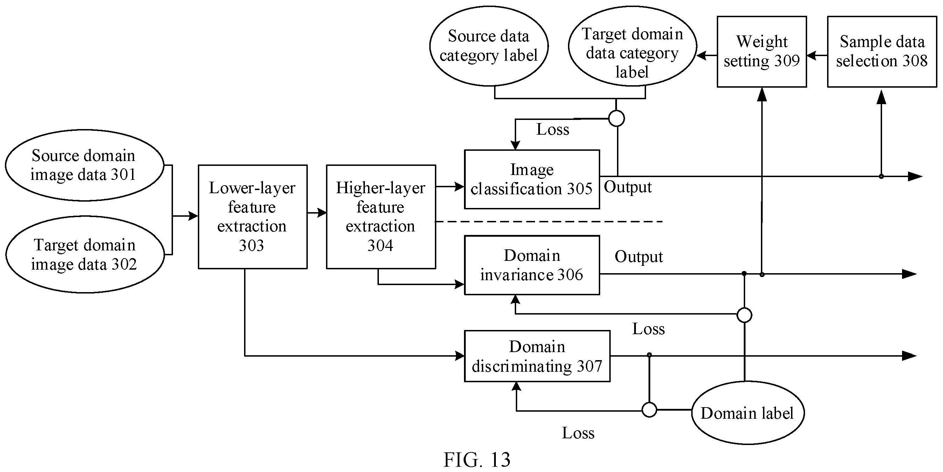

The training method provided in this embodiment of this application is implemented based on an enhanced collaborative adversarial network, for example, an enhanced collaborative adversarial network constructed based on a CNN shown in FIG. 13. A collaborative adversarial network is a network including separately established domain discriminating loss function and domain invariant loss function based on a lower-layer feature and a higher-layer feature. Optionally, the domain discriminating loss function is configured in the domain discriminating feature unit 114, and the domain invariant loss function is configured in the domain-invariant feature unit 113. The enhanced collaborative adversarial network is further obtained based on the collaborative adversarial network by adding a process in which training data is selected from target domain data and a weight is set for training. The training method provided in this embodiment of this application is described below by using an image classifier as an example.

As shown in FIG. 13, source domain image data 301 and target domain image data 302 are input. The source domain image data 301 is image data labeled with a category label. The target domain image data 302 is image data labeled without a category label. The category label is used to indicate a category of the image data. A trained image classifier is used to predict the category of the image data. The image data may be a picture or a video stream, or may be in another form of the image data. The source domain image data 301 and the target domain image data 302 separately correspond to domain labels. The domain label is used to indicate a domain to which the image data belongs. There is a difference between the source domain image data 301 and the target domain image data 302 (for example, the example given in the foregoing application scenario embodiment). The difference is different data distribution in terms of mathematical expression.

### Lower-layer feature extraction 303 part

Both the source domain image data 301 and the target domain image data 302 are processed by the lower-layer feature extraction 303, to obtain a lower-layer feature corresponding to each piece of data. The lower-layer feature extraction 303 corresponds to the lower-layer feature extraction subunit 1111. Convolution calculation may be performed by using the CNN to extract a lower-layer feature of the image data.

Specifically, input data of the lower-layer feature extraction 303 includes the source domain image data 301, and may be expressed as ${D}_{s} = \left\{{\left({x}_{i}^{s}, {y}_{i}^{s}\right) |}_{i = 1}^{{N}_{s}}\right\} ,$ where ${x}_{i}^{s}$ is an i^{th} piece of data in the source domain image data, ${y}_{i}^{s}$ is the category label of the source domain image data, and *Nₛ* is a quantity of samples in the source domain image data. Correspondingly, the target domain image data 301 may be represented as ${D}_{t} = \left\{{\left({x}_{i}^{t}\right) |}_{i = 1}^{{N}_{t}}\right\} ,$ and is without the category label. The lower-layer feature extraction 303 may be implemented by using a series of convolutional layers, specification layers, and downsampling layers, and is represented by *Fₖ*(*xᵢ*;θ*ₖ*), where k is a quantity of layers of the lower-layer feature extraction 303, and θ*ₖ* is a parameter of the lower-layer feature extraction 303.

### Higher-layer feature extraction 304 part

The higher-layer feature extraction 304 is obtained by further processing the lower-layer feature based on the lower-layer feature extraction 303. Optionally, the higher-layer feature extraction 304 corresponds to the higher-layer feature extraction subunit 1112. Convolution calculation may be performed by using the CNN to extract a higher-layer feature of the image data. Similar to the lower-layer feature extraction 303, a series of convolutional layers, specification layers, and downsampling layers may be specifically used for implementation. The higher-layer feature extraction 304 may be represented by *Fₘ*(*xᵢ*;**θ***ₘ*), where m is a total quantity of layers of feature extraction layers.

An image classification 305 outputs predicted category information for the higher-layer feature input by the layer feature extraction 304, and may be represented as *C* : *f* → *yᵢ*, or may be represented as an image classifier *C*(*F*(*xᵢ*;Θ*_{F}*),**c**), where c is a parameter of the image classifier. Image classification may be extended to various computer vision tasks, including detection, identification, segmentation, and the like. In addition, a classification loss function (corresponding to the third loss function) is defined based on the output of the image classification 305 and the category label of the image data (corresponding to the category label of the source data in FIG. 13), to optimize a parameter of the image classification 305. This classification loss function may be defined as $L \left(C\left(F\left({x}_{i}, {Θ}_{F}\right),c\right),{y}_{i}^{s}\right) ,$ in other words, a cross entropy between the output of the image classification 305 and the corresponding category label. Because the source domain image data 301 has the category label, a classification loss function of the source domain image data 301 may be defined as ${L}_{src} \left(C\left(F\left({x}_{i}, {Θ}_{F}\right),c\right),{y}_{i}^{s}\right) .$ A slave parameter of the image classification 305 is iteratively optimized, so that the classification loss function is minimized, to obtain the image classifier. It should be noted that the image classifier herein does not include the feature extraction parts. The image classifier needs to cooperate with the feature extraction parts (the lower-layer feature extraction 303 and the higher-layer feature extraction 304) during actual use. A training process actually is a process for updating and optimizing parameters of the image classification 305 (the image classifier), the lower-layer feature extraction 303 and the higher-layer feature extraction 304.

### Domain invariance 306 part

A higher-layer feature of an image used by the image classifier should have domain invariance in order that the image classifier/model trained based on the source domain image data 301 can also have relatively high classification precision on the target domain image data 302. To achieve such an objective, the domain invariance 306 enables the higher-layer feature to be incapable of discriminating domains. Therefore, the higher-layer feature has the domain invariance. Specifically, the domain invariance 306 includes a domain discriminator set for the higher-layer feature extraction 304, and may be expressed as *D*(*F*(*xᵢ*;Θ*_{F}*),**w**), where w is a parameter of the domain discriminator. Similar to the image classifier, a domain invariant loss function *L_{D}*(*D*(*F*(*xᵢ*;Θ*_{F}*),**w**),*dᵢ*) (corresponding to the first loss function) may also be defined based on an output of the domain invariance 306 and a domain label. Different from the classification loss function, in order to make a high-layer feature of the source domain image data 301 and the target domain image data 302 have the domain invariance, the domain invariance 306 uses a gradient inversion method to increase the domain invariant loss function, rather than minimize the loss. The gradient inversion method can be implemented by using any prior art. A specific gradient inversion method is not limited herein. Similar to the image classifier, it should be noted that the domain discriminator herein does not include the feature extraction parts. The domain discriminator needs to cooperate with the feature extraction parts (the lower-layer feature extraction 303 and the higher-layer feature extraction 304) during actual use. A training process actually is a process for updating and optimizing parameters of the domain discriminator in the domain invariance 305, the lower-layer feature extraction 303, and the higher-layer feature extraction 304.

It should be noted that both the domain invariant loss function and the classification loss function need to be optimized to form an adversarial network in the training process, and need to be resolved by using a multi-task optimization method.

### Domain discriminating 307 part

Generally, a lower-layer feature of an image includes an edge, a corner, and the like of the image. These features are usually relatively greatly related to a domain, and may be used for domain discriminating. If only the domain-invariant feature is emphasized in training, distribution of the higher-layer feature of the source domain image data 301 is similar to that of the target domain image data 302, so that an image classification model obtained by training based on the source domain image data has a relatively good effect on the target domain image data. Similarly, the lower-layer feature also has the domain invariance, resulting that a large quantity of domain discriminating features are lost. Therefore, for the lower-layer feature extraction 303, a domain discriminating loss function (corresponding to the second loss function) is defined based on an output of the domain discriminating 307 and a domain label, so that an extracted lower-layer feature has domain discriminating. Specifically, the domain discriminating loss function may be expressed as *L_{D}*(*D*(*F*(*xᵢ*;**θ***ₖ*),**w***ₖ*),*dᵢ*), where k is a quantity of layers of the domain discriminating loss function.

The domain discriminating loss function and the domain invariant loss function are combined to form the cooperative adversarial network, and an overall loss function may be expressed as: ${min}_{{Θ}_{F} , w , {λ}_{k}} {L}_{CAN} = {\sum }_{k = 1}^{m - 1} {λ}_{k} {L}_{D} \left({θ}_{k}, {w}_{k}\right) + {λ}_{m} {L}_{D} \left({θ}_{m}, {w}_{m}\right)$ *s.t.*${\sum }_{k = 1}^{m - 1} {λ}_{k} = {λ}_{0} , \left|{λ}_{k}\right| \leq {λ}_{0}$

Herein, ${L}_{D} \left({θ}_{k}, {w}_{k}\right) = \frac{1}{N} {\sum }_{i = 1}^{N} {L}_{D} \left(D\left(F\left({x}_{i}, θ\right);w\right),{d}_{i}\right)$ is a domain discriminating target of a layer, *λₖ* is a weight of a k layer loss function, *λₘ* is a weight of an m layer loss function, and *λₘ* is a negative value. In a target function, the domain discriminating feature is balanced with the domain-invariant feature by using the weight, and a parameter is optimized in a network training process by using a gradient-based method, thereby improving network performance.

### Sample data selection 308 part

To further improve classification precision of a trained image classification model on a target domain image data, the target domain image data may be used for training the image classification model. Because the target domain image data 302 originally has no category label, a higher-layer feature obtained by the target domain image data 302 by using the lower-layer feature extraction 303 and the higher-layer feature extraction 304 may be input into the image classification 305, and an output of the image classification 305 is used as a label of the target domain image data 302. In other words, the output of an image classification model trained by using the foregoing method based on the target domain image data 302 is used as a category label of the target domain image data 302. Then, the target domain image data with the category label is used as new training data and added to a following iterative training process. For details, refer to (1) to (6) in the embodiment corresponding to FIG. 12. However, not all target domain image data that obtains the category label by using the image classification model may be used as the target domain training sample data. An output of the image classification model for the sample data includes category information and a confidence level. When an output confidence level is high, a probability that the category information is correctly output is high. Therefore, the target domain image data with the high confidence level may be selected as the target domain training sample data. Specifically, first, a threshold is set, and then image data whose confidence is greater than the threshold is selected from the target domain image data 302 as the target domain training sample data. In addition, in consideration of a relatively low precision of the image classification model in a training process, Classification precision increases with increasing quantity of training times. Therefore, setting of the threshold is related to model precision, in other words, an adaptive threshold is set based on precision of a currently obtained image classification model. For specific threshold setting, refer to related descriptions in the embodiment corresponding to FIG. 12. Details are not described herein again.

### Weight setting 309 part

A weight is set for the selected target domain training sample data based on the output of the domain discriminator in the domain invariance 306. When the target domain training sample data is not likely to be discriminated by the domain discriminator, distribution of the target domain training sample data is relatively close to that of the source domain image data and the target domain image data, and is more helpful for training of the image classification model, so that a larger weight may be set. If the target domain training sample data is very easily discriminated by the domain discriminator, the target domain training sample data has a smaller value for training the image classification model, and a weight of the target domain training sample data in a loss function may be reduced. As shown in FIG. 14, a sample weight 0.5 output by the domain discriminator is the largest. Weights at two sides gradually decrease. When a specific value is reached, the weight is 0. The weight may be expressed in the following formula: $h \left({x}_{i}^{t}\right) = - {\left|z∗\left(d\left({x}_{i}^{t}\right)-0.5\right)\right|}^{α} + 1$

Herein, z is a parameter that can be learned, and *α* is a constant. According to this formula, a sample weight may be expressed as $w \left({x}_{i}^{t}\right) = βσ \left(h\left({x}_{i}^{t}\right),0\right) + max \left(h\left({x}_{i}^{t}\right),0\right)$

Optionally, a weight of the target domain training sample data closer to the target domain image data is set to a larger value. Such a weight may be set by using a plurality of methods. For example, if $d \left({x}_{i}^{t}\right) > 0.5 ,$ the weight is set to a weight value corresponding to $d \left({x}_{i}^{t}\right)$ in the foregoing formula: $w \left({x}_{i}^{t}\right) = { \begin{matrix}\begin{matrix}βσ \left(h\left({x}_{i}^{t}\right),0\right) + max \left(h\left({x}_{i}^{t}\right),0\right) , & if d \left({x}_{i}^{t}\right) < 0.5\end{matrix} \\ \begin{matrix}1 + β , & if d \left({x}_{i}^{t}\right) \geq 0.5\end{matrix}\end{matrix}$

After the target domain training sample data is selected and the weight is set, a classification loss function may be established for the target domain training sample data, and may be expressed as: ${min}_{{Θ}_{F} , c} {L}_{tar} = \frac{1}{{N}_{t}} {\sum }_{i = 1}^{{N}_{t}} s \left({x}_{i}^{t}\right) w \left({x}_{i}^{t}\right) {L}_{C} \left(C\left(F\left({x}_{i}^{t}, {Θ}_{F}\right);c\right),{y}_{i}^{t}\right)$

Herein, ${y}_{i}^{t}$ is the output of the previously trained image classifier based on the target domain training sample data. Therefore, the overall loss function based on the enhanced collaborative adversarial network includes three parts, in other words, the classification loss function of the source domain image data, collaborative adversarial loss functions of the lower-layer feature and the higher-layer feature, and the classification loss function of the target domain training sample data, and may be represented as: ${min}_{{Θ}_{F} , c , W , {λ}_{k}} {L}_{total} = {L}_{src} + {L}_{tar} + {L}_{CAN}$

The overall loss function may be optimized by using a random gradient-based backpropagation method, to update a parameter of each part in the enhanced collaborative adversarial network, train the image classification model, and predicting a category of the target domain image data by using the image classification model. In the training process, an initial collaborative adversarial network may be first trained by using the source domain image data and a category label. After the sample data selection 308 and the weight setting 309 are trained by using an adaptive target domain to select a sample and set a weight, the initial collaborative adversarial network is trained by using the selected sample and the set weight together with the source domain image data.

It should be noted that, in FIG. 13, the lower-layer feature extraction 303, the higher-layer feature extraction 304, the image classification 305, the domain invariance 306, the domain discriminating 307, the sample data selection 308, and the weight setting 309 may be considered as composition modules of the enhanced collaborative adversarial network, or may be considered as operation steps in the training method based on the enhanced collaborative adversarial network.

An embodiment of this application provides a chip hardware structure. As shown in FIG. 15, the convolutional neural network-based algorithm/method described in the foregoing embodiments of this application (the algorithm/method in the embodiment corresponding to FIG. 12 and the embodiment corresponding to FIG. 13) may be all or partly implemented in an NPU chip shown in FIG. 15.

A neural network processor NPU 50 NPU, as a coprocessor, is mounted to a host CPU (Host CPU), and the host CPU assigns a task. A core part of the NPU is an operation circuit 50. The operation circuit 503 is controlled by a controller 504 to extract matrix data in a memory and perform a multiplication operation.

In some implementations, the operation circuit 503 includes a plurality of processing units (Process Engine, PE) inside. In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there are an input matrix A, a weight matrix B, and an output matrix C. The operation circuit fetches data corresponding to the matrix B from a weight memory 502 and buffers the data in each PE of the operation circuit. The operation circuit fetches data of the matrix A from an input memory 501, to perform a matrix operation on the matrix B, and a partial result or a final result of an obtained matrix is stored in an accumulator (accumulator) 508.

A unified memory 506 is configured to store input data and output data. The weight data is directly transferred to the weight memory 502 by using a storage unit access controller (Direct Memory Access Controller, DMAC) 505. The input data is also transferred to the unified memory 506 by using the DMAC.

ABIU is a bus interface unit, in other words, a bus interface unit 510, and is configured to perform interaction between an AXI bus, and the DMAC and an instruction fetch buffer (Instruction Fetch Buffer) 509.

The bus interface unit (Bus Interface Unit, BIU for short) 510 is used by the instruction fetch buffer 509 to obtain an instruction from an external memory, and is further used by the storage unit access controller 505 to obtain original data of the input matrix A or the weight matrix B from the external memory.

The DMAC is mainly configured to transfer input data in the external memory DDR to the uniform memory 506, or transfer weight data to the weight memory 502, or transfer input data to the input memory 501.

A vector calculation unit 507 includes a plurality of operation processing units, and if necessary, performs further processing such as vector multiplication, vector addition, an exponential operation, a logarithmic operation, or value comparison on outputs of the operation circuit. The vector calculation unit 507 is mainly configured to perform network calculation at a non-convolution/FC layer in a neural network, for example, pooling (pooling), batch normalization (batch normalization), or local response normalization (local response normalization).

In some implementations, the vector calculation unit 507 can store, in the unified cache 506, a processed output vector. For example, the vector calculation unit 507 can apply a non-linear function to the output of the operation circuit 503, for example, a vector of an accumulated value, to generate an activated value. In some implementations, the vector calculation unit 507 generates a normalized value, a combined value, or both. In some implementations, the processed output vector can be used as an activated input into the operation circuit 503, for example, for use in subsequent layers in the neural network.

The instruction fetch buffer (instruction fetch buffer) 509 connected to the controller 504 is configured to store an instruction used by the controller 504.

The unified memory 506, the input memory 501, the weight memory 502, and the instruction fetch buffer 509 are all on-chip memories. The external memory is private for the NPU hardware architecture.

Operations at layers in the convolutional neural network may be performed by a matrix computing unit 212 or the vector computing unit 507.

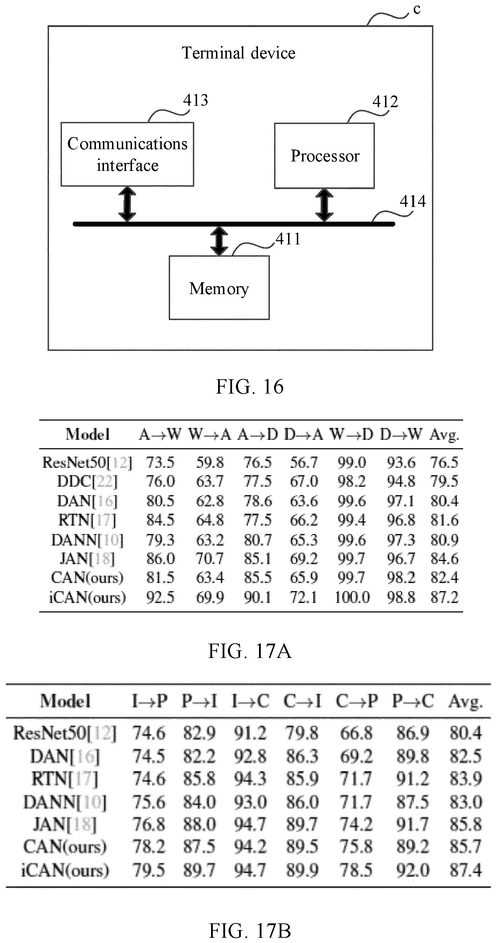

An embodiment of this application provides a training device 410. As shown in FIG. 16, the training device 410 includes: a processor 412, a communications interface 413, and a memory 411. Optionally, the training device 410 may further include a bus 414. The communications interface 413, the processor 412, and the memory 411 may be connected to each other by using the bus 414. The bus 414 may be a peripheral component interconnect (English: Peripheral Component Interconnect, PCI for short) bus, an extended industry standard architecture (Extended Industry Standard Architecture, EISA for short) bus, or the like. The bus 414 may be classified into an address bus, a data bus, a control bus, and the like. For ease of representation, only one thick line is used to represent the bus in FIG. 16, but this does not mean that there is only one bus or only one type of bus.

The training device shown in FIG. 16 may be used to replace the training apparatus 110 to perform the method described in the foregoing method embodiment. For specific implementation, refer to corresponding descriptions in the foregoing method embodiment. Details are not described herein again.

Methods or algorithm steps described in combination with the content disclosed in the embodiments of the present invention may be implemented by hardware, or may be implemented by a processor by executing a software instruction. The software instruction may be formed by a corresponding software module. The software module may be stored in a random access memory (English: Random Access Memory, RAM), a flash memory, a read-only memory (English: Read-Only Memory, ROM), an erasable programmable read-only memory (English: Erasable Programmable ROM, EPROM), an electrically erasable programmable read-only memory (English: Electrically EPROM, EEPROM), a register, a hard disk, a removable hard disk, a compact disc read-only memory (CD-ROM), or any storage medium in another form well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device. Certainly, the processor and the storage medium may exist in the terminal device as discrete assemblies.

According to the training method provided in this embodiment of this application, a transfer learning test is performed on the disclosed standard datasets Office-31 and ImageCLEF-DA. Office-31 is a standard dataset for object recognition, and includes total 4110 pictures of objects in 31 categories. Office-31 includes data in four fields: Amazon (A), Webcam (W), and Dlsr (D). A learning process of migrating from any field to another field is tested, and transfer learning precision is evaluated.

ImageCLEF-DA is a dataset of the combat game in CLEF 2014, including data in three fields: ImageNet ILSVRC2012 (I), Bing (B), and Pascal VOC 2012 (P). Data in each field includes data in 12 categories, and each category has 50 pictures. Similarly, identification precision of migration from one field to another field is tested, and there are six migration manners in total.

FIG. 17A and FIG. 17B show test precision of the method provided based on the embodiments of this application and several other methods, such as ResNet50, DANN, and JAN methods, and provide an average transfer learning precision. It can be learned that the cooperative adversarial network-based algorithm (CAN) obtains a best effect other than the JAN, and the enhanced cooperative adversarial network (according to the present invention) obtains an optimal effect. Average migration accuracy of the enhanced cooperative adversarial network is 2 to 3 percentage points higher than that of the currently best method JAN.

Therefore, according to the training method that is based on the enhanced collaborative adversarial network and that is provided in the embodiments of this application, the domain invariant loss function and the domain discriminating loss function are separately established based on the higher-layer feature extraction and the lower-layer feature extraction, so as to ensure the domain-invariant feature of the higher-layer feature and retain the domain discriminating feature of the lower-layer feature, which can improve the precision of image classification prediction when the image classifier is applied to the target domain.

A person of ordinary skill in the art may understand that all or some of the processes of the methods in the embodiments may be implemented by a computer program instructing relevant hardware. The program may be stored in a computer-readable storage medium. When the program is executed, the processes of the methods in the embodiments are performed. The foregoing storage medium includes any medium that can store program code, such as a ROM, a RAM, a magnetic disk, or an optical disc.

The foregoing descriptions are merely several embodiments of the present invention. A person skilled in the art can make modifications or variations to the present invention based on the disclosure of the application documents without departing from the spirit and scope of the present invention.

## Claims

1. A method for training a deep neural network, comprising:
extracting a lower-layer feature and a higher-layer feature of sample data in each of source domain data and target domain data, wherein data distribution of the target domain data is different from that of the source domain data;
calculating, by using a first loss function, a first loss corresponding to the sample data based on the higher-layer feature of the sample data in each of the source domain data and the target domain data and a corresponding domain label;
calculating, by using a second loss function, a second loss corresponding to the sample data based on the lower-layer feature of the sample data in each of the source domain data and the target domain data and a corresponding domain label;
calculating, by using a third loss function, a third loss corresponding to the sample data in the source domain data based on the higher-layer feature of the sample data in the source domain data and a corresponding sample label; and
updating a parameter of a target deep neural network based on the first loss, the second loss, and the third loss, wherein gradient reversal is performed on a gradient of the first loss, and the gradient reversal can implement a reverse conduction gradient for loss increasing.

2. The training method according to claim 1, wherein the target deep neural network comprises a feature extraction module, a task module, a domain-invariant feature module, and a domain discriminating feature module, the feature extraction module comprises at least one lower-layer feature network layer and a higher-layer feature network layer, any one of the at least one lower-layer feature network layer can be used for extracting a lower-layer feature, the higher-layer feature network layer is used for extracting a higher-layer feature, the domain-invariant feature module is configured to enhance domain invariance of the higher-layer feature extracted by the feature extraction module, and the domain discriminating feature module is configured to enhance domain discriminating of the lower-layer feature extracted by the feature extraction module; and
the updating a parameter of a target deep neural network based on the first loss, the second loss, and the third loss comprises:
calculating a total loss based on the first loss, the second loss, and the third loss; and
updating parameters of the feature extraction module, the task module, the domain-invariant feature module, and the domain discriminating feature module based on the total loss.

3. The training method according to claim 2, wherein the calculating, by using a first loss function, a first loss corresponding to the sample data based on the higher-layer feature of the sample data in each of the source domain data and the target domain data and a corresponding domain label comprises: inputting the higher-layer feature of the sample data in each of the source domain data and the target domain data into the domain-invariant feature module to obtain a first result corresponding to the sample data; and calculating, by using the first loss function, the first loss corresponding to the sample data based on the first result corresponding to the sample data in each of the source domain data and the target domain data and the corresponding domain label;
the calculating, by using a second loss function, a second loss corresponding to the sample data based on the lower-layer feature of the sample data in each of the source domain data and the target domain data and a corresponding domain label comprises:
inputting the lower-layer feature of the sample data in each of the source domain data and the target domain data into the domain discriminating feature module to obtain a second result corresponding to the sample data; and calculating, by using the second loss function, the second loss corresponding to the sample data based on the second result corresponding to the sample data in each of the source domain data and the target domain data and the corresponding domain label; and
the calculating, by using a third loss function, a third loss corresponding to the sample data in the source domain data based on the higher-layer feature of the sample data in the source domain data and a corresponding sample label comprises: inputting the higher-layer feature of the sample data in the source domain data into the task module to obtain a third result corresponding to the sample data in the source domain data; and calculating, by using the third loss function, the third loss corresponding to the sample data in the source domain data based on the third result corresponding to the sample data in the source domain data and the corresponding sample label.

4. The training method according to claim 2 or 3, wherein the domain-invariant feature module further comprises: a gradient reversal module; and
the training method further comprises:
performing the gradient reversal on the gradient of the first loss by using the gradient reversal module.

5. The training method according to claim 3 or 4, further comprising:
inputting the higher-layer feature of the sample data in the target domain data into the task module to obtain a corresponding prediction sample label and corresponding confidence; and
selecting target domain training sample data from the target domain data based on the confidence corresponding to the sample data in the target domain data, wherein the target domain training sample data is sample data that is in the target domain data and whose corresponding confidence satisfies a preset condition.

6. The training method according to claim 5, further comprising:
setting a weight of the target domain training sample data based on a first result corresponding to the target domain training sample data.

7. The training method according to claim 6, wherein the setting a weight of the target domain training sample data based on a first result corresponding to the target domain training sample data comprises:
setting the weight of the target domain training sample data based on a similarity between the first result corresponding to the target domain training sample data and a domain label, wherein the similarity indicates a difference between the first result and the domain label.

8. The training method according to claim 7, wherein the setting the weight of the target domain training sample data based on a similarity between the first result corresponding to the target domain training sample data and a domain label comprises:
calculating a first difference between the first result corresponding to the target domain training sample data and a domain label of a source domain, and a second difference between the first result corresponding to the target domain training sample data and a domain label of a target domain; and
if an absolute value of the first difference is greater than an absolute value of the second difference, setting the weight of the target domain training sample data to a smaller value, otherwise, setting the weight of the target domain training sample data to a larger value.

9. The training method according to claim 7, wherein if the first result corresponding to the target domain training sample data is an intermediate value between a first domain label value and a second domain label value, the weight of the target domain training sample data is set to a maximum value, the first domain label value is a value corresponding to a domain label of a source domain, and the second domain label value is a value corresponding to a domain label of a target domain.

10. The training method according to any one of claims 5 to 9, before the selecting target domain training sample data from the target domain data based on the confidence corresponding to the sample data in the target domain data, further comprising:
setting an adaptive threshold based on precision of a task model, wherein the task model comprises the feature extraction module and the task module, and the adaptive threshold is positively correlated to the precision of the task model; and
the preset condition is that the confidence is greater than or equal to the adaptive threshold.

11. The training method according to claim 10, wherein the adaptive threshold is calculated by using the following logical function: ${T}_{c} = \frac{1}{1 + {e}^{- {λ}_{c} ∗ A}} ,$ wherein
*T_{c}* is the adaptive threshold, A is the precision of the task model, and *λ_{c}* is a hyperparameter used to control an inclination degree of the logical function.

12. The training method according to any one of claims 5 to 11, wherein the training method further comprises:
extracting, by using the feature extraction module, a lower-layer feature and a higher-layer feature of the target domain training sample data;
calculating, by using the first loss function, a first loss corresponding to the target domain training sample data based on the higher-layer feature of the target domain training sample data and a corresponding domain label;
calculating, by using the second loss function, a second loss corresponding to the target domain training sample data based on the lower-layer feature of the target domain training sample data and a corresponding domain label;
calculating, by using the third loss function, a third loss corresponding to the target domain training sample data based on the higher-layer feature of the target domain training sample data and a corresponding prediction sample label;
calculating, based on the first loss, the second loss, and the third loss corresponding to the target domain training sample data, a total loss corresponding to the target domain training sample data, wherein gradient reversal is performed on a gradient of the first loss corresponding to the target domain training sample data; and
updating the parameters of the feature extraction module, the task module, the domain-invariant feature module, and the domain discriminating feature module based on the total loss corresponding to the target domain training sample data and the weight of the target domain training sample data.

13. The training method according to claim 12, wherein the calculating, by using the first loss function, a first loss corresponding to the target domain training sample data based on the higher-layer feature of the target domain training sample data and a corresponding domain label comprises: inputting the higher-layer feature of the target domain training sample data into the domain-invariant feature module to obtain a first result corresponding to the target domain training sample data; and calculating, by using the first loss function, the first loss corresponding to the target domain training sample data based on a first result corresponding to the target domain training sample data and the corresponding domain label;
the calculating, by using the second loss function, a second loss corresponding to the target domain training sample data based on the lower-layer feature of the target domain training sample data and a corresponding domain label comprises: inputting the lower-layer feature of the target domain training sample data into the domain discriminating feature module to obtain a second result corresponding to the target domain training sample data; and calculating, by using the second loss function, the second loss corresponding to the target domain training sample data based on the second result corresponding to the target domain training sample data and the corresponding domain label; and
the calculating, by using the third loss function, a third loss corresponding to the target domain training sample data based on the higher-layer feature of the target domain training sample data and a corresponding prediction sample label comprises:
inputting the higher-layer feature of the target domain training sample data into the task module to obtain a third result corresponding to the target domain training sample data;
and calculating, by using the third loss function, the third loss corresponding to the target domain training sample data based on the third result corresponding to the target domain training sample data and the corresponding prediction sample label.

14. A training device, comprising a memory and a processor coupled with the memory, wherein the memory is configured to store an instruction, and the processor is configured to execute the instruction, and when executing the instruction, the processor performs the method according to any one of claims 1 to 13.

15. A computer-readable storage medium, wherein the computer-readable storage medium stores a computer program, and when the computer program is executed by a processor, the method according to any one of claims 1 to 13 is implemented.

16. An enhanced collaborative adversarial network, wherein the enhanced collaborative adversarial network is constructed based on a convolutional neural network CNN, and comprises:
a feature extraction module, configured to extract a lower-layer feature and a higher-layer feature of sample data in each of source domain data and target domain data, wherein data distribution of the target domain data is different from that of the source domain data;
a task module, configured to: receive the higher-layer feature output by the feature extraction module, and calculate, by using a third loss function, a third loss corresponding to the sample data, wherein the third loss is used to update parameters of the feature extraction module and the task module;
a domain invariant module, configured to: receive the higher-layer feature output by the feature extraction module, and calculate, by using a first loss function, a first loss corresponding to the sample data, wherein the first loss is used to update parameters of the feature extraction module and the domain invariant module, so that the higher-layer feature output by the feature extraction module has domain invariance; and
a domain discriminating module, configured to: receive the lower-layer feature output by the feature extraction module, and calculate, by using a second loss function, a second loss corresponding to the sample data, wherein the second loss is used to update parameters of the feature extraction module and the domain discriminating module, so that the lower-layer feature output by the feature extraction module has domain discriminating.

17. The enhanced collaborative adversarial network according to claim 16, further comprising: a sample data selection module, configured to select target domain training sample data from the target domain data based on confidence corresponding to the sample data in the target domain data, wherein the confidence corresponding to the sample data in the target domain data is obtained by inputting the higher-layer feature of the sample data in the target domain data into the task module, and the target domain training sample data is sample data that is in the target domain data and whose corresponding confidence satisfies a preset condition.

18. The enhanced collaborative adversarial network according to claim 17, wherein the sample data selection module is further configured to: set an adaptive threshold based on precision of a task model, wherein the task model comprises the feature extraction module and the task module, and the adaptive threshold is positively correlated to the precision of the task model, and the preset condition is that the confidence is greater than or equal to the adaptive threshold.

19. The enhanced collaborative adversarial network according to claim 17 or 18, further comprising a weight setting module, configured to set a weight of the target domain training sample data based on a first result corresponding to the target domain training sample data.

20. The enhanced collaborative defense network according to claim 19, wherein the weight setting module is specifically configured to: set the weight of the target domain training sample data based on a similarity between the first result corresponding to the target domain training sample data and a domain label, wherein the similarity indicates a difference between the first result and the domain label.

21. The enhanced collaborative adversarial network according to claim 20, wherein the weight setting module is specifically configured to: calculate a first difference between the first result corresponding to the target domain training sample data and a domain label of a source domain, and a second difference between the first result corresponding to the target domain training sample data and a domain label of a target domain; if an absolute value of the first difference is greater than an absolute value of the second difference, set the weight of the target domain training sample data to a smaller value, otherwise, set the weight of the target domain training sample data to a larger value.

22. The enhanced collaborative adversarial network according to claim 20, wherein the weight setting module is specifically configured to: if the first result corresponding to the target domain training sample data is an intermediate value between a first domain label value and a second domain label value, set the weight of the target domain training sample data to a maximum value, wherein the first domain label value is a value corresponding to a domain label of a source domain, and the second domain label value is a value corresponding to a domain label of a target domain.
